# EUROPEAN PATENT APPLICATION

(11) **EP 4 779 497 A1**
(43) Date of publication of application: **22.07.2026**
(21) Application number: 24882686.9
(22) Date of filing: 02.10.2024
(51) Int. Cl.: G06F 16/955, G06F 16/9032, G06F 16/904, G06F 16/909, G06F 16/84, H04L 51/04, G06N 20/00

(54) **ELECTRONIC DEVICE AND WEBPAGE STORAGE METHOD USING SAME**

(30) Priority: 23.10.2023 KR 20230142193; 21.11.2023 KR 20230161995
(71) Applicant: Samsung Electronics Co., Ltd., Suwon-si, Gyeonggi-do 16677 (KR)
(72) Inventor: SON, Dongil, Suwon-si, Gyeonggi-do 16677 (KR); YEO, Jaeyung, Suwon-si, Gyeonggi-do 16677 (KR); JEON, Yongjoon, Suwon-si, Gyeonggi-do 16677 (KR)
(74) Representative: Gulde & Partner
(86) International application number: PCT/KR2024/015014
(87) International publication number: WO 2025/089658

(57) **Abstract**

According to an embodiment of the present disclosure, an electronic device may comprise: a display; memory storing instructions; and a processor. According to an embodiment, the instructions, when executed by the processor, may cause the electronic device to display a first webpage on the display. According to an embodiment, the instructions, when executed by the processor, may cause the electronic device to detect a user input related to a bookmark setting of the first webpage. According to an embodiment, the instructions, when executed by the processor, may cause the electronic device to acquire, in response to the user input, first information related to at least one application used before a time point at which the user input is detected. According to an embodiment, the instructions, when executed by the processor, may cause the electronic device to generate bookmark information related to the first webpage on the basis of the acquired first information. According to an embodiment, the instructions, when executed by the processor, may cause the electronic device to map identification information related to the first webpage and the generated bookmark information and store the mapped information in the memory. In addition to various embodiments disclosed in the present document, various other embodiments are possible.

## Description

### [Technical Field]

Embodiments of the disclosure relate to an electronic device and a web page storage method using the same.

### [Background Art]

In line with widespread use of various electronic devices, such as a smart phone, a tablet PC, a laptop personal computer, and a wearable electronic device, functions may be provided using various electronic devices. For example, an electronic device may provide a bookmark function such that a web page displayed on the display can be bookmarked. For example, while the electronic device displays a web page on the display, if an input for bookmarking the web page is detected, identification information related to the web page (e.g., the URL and name of the web page) may be mapped and stored. In addition, upon detecting an input for selecting a bookmarked web page, the electronic device may display the selected web page on the display and provide the same to the user.

The above-described information may be provided as a related art for the purpose of helping the understanding of the disclosure. No claim or decision is raised regarding whether any of the above description is applicable as a prior art related to the disclosure.

### [Disclosure of Invention]

### [Technical Problem]

However, before selecting a bookmarked web page, the user may not remember the reason a bookmark has been configured for the web page solely with identification information related to the bookmarked web page. In this case, the user may guess why the bookmark has been configured after viewing the web page displayed by the selecting the bookmarked web page, or may fail to remember why the bookmark has been configured for the web page. As a result, the bookmarked web page may not be utilized.

Upon detecting an input for bookmarking a web page, an electronic device according to an embodiment of the disclosure may obtain information related to at least one application that has been used before the time point of detection of the input for bookmarking a web page, and may generate bookmark information related to the web page, based on the obtained information.

### [Solution to Problem]

An electronic device according to an embodiment of the disclosure may include a display, memory storing instructions, and a processor. According to an embodiment, the instructions, when executed by the processor, may cause the electronic device to display a first web page on the display. According to an embodiment, the instructions, when executed by the processor, may cause the electronic device to detect a user input related to a bookmark configuration of the first web page. According to an embodiment, the instructions, when executed by the processor, may cause the electronic device to obtain first information related to at least one application used before a time point at which the user input is detected, in response to the user input. According to an embodiment, the instructions, when executed by the processor, may cause the electronic device to generate bookmark information related to the first web page, based on the obtained first information. According to an embodiment, the instructions, when executed by the processor, may cause the electronic device to map identification information related to the first web page and the generated bookmark information and store the same in the memory.

A method for storing a web page by an electronic device according to an embodiment of the disclosure may include an operation of displaying a first web page on a display. The method for storing a web page by an electronic device according to an embodiment may include an operation of detecting a user input related to a bookmark configuration of the first web page. The method for storing a web page by an electronic device according to an embodiment may include an operation of, in response to the user input, obtaining first information related to at least one application used before a time point when the user input is detected. The method for storing a web page by an electronic device according to an embodiment may include an operation of generating bookmark information related to the first web page, based on the obtained first information. The method for storing a web page by an electronic device according to an embodiment may include an operation of mapping identification information related to the first web page and the generated bookmark information, and storing the mapped information in the memory.

According to an embodiment of the disclosure, a non-transitory computer-readable medium (or computer program product) storing one or more programs may be described. One or more programs according to an embodiment may include instructions which, when executed by a processor of an electronic device, display a first web page on a display. One or more programs according to an embodiment may include instructions which, when executed by a processor of an electronic device, detect a user input related to a bookmark configuration of the first web page. One or more programs according to an embodiment may include instructions which, when executed by a processor of an electronic device, in response to the user input, obtain first information related to at least one application used before a time point when the user input is detected. One or more programs according to an embodiment may include instructions which, when executed by a processor of an electronic device, generate bookmark information related to the first web page, based on the obtained first information. One or more programs according to an embodiment may include instructions which, when executed by a processor of an electronic device, map identification information related to the first web page and the generated bookmark information, and store the mapped information in the memory.

### [Advantageous Effects of Invention]

In case of providing a list of bookmarked web pages, an electronic device according to an embodiment of the disclosure may provide bookmark information generated based on information related to at least one application, together with identification information related to the bookmarked web pages. Accordingly, the user may remember the reason for the web page bookmark configuration through bookmark information related to the web page, thereby increasing the usability of the bookmarked web page.

### [Brief Description of Drawings]

FIG. 1 is a block diagram of an electronic device in a network environment according to an embodiment of the disclosure.
FIG. 2 is a block diagram illustrating an electronic device according to an embodiment of the disclosure.
FIG. 3 is a flowchart for describing a method for generating bookmark information of a web page according to an embodiment of the disclosure.
FIG. 4 is a flowchart of detailed operations of obtaining first information in operation 315 of FIG. 3 according to an embodiment of the disclosure.
FIG. 5 and FIG. 6 are diagrams for describing operations of obtaining first information through an SNS application according to an embodiment of the disclosure.
FIG. 7 is a diagram for describing operations of obtaining first information through an interactive search application according to an embodiment of the disclosure.
FIG. 8A and FIG. 8B are diagrams for describing operations of obtaining first information through a web browser application according to an embodiment of the disclosure.
FIG. 9 is a diagram illustrating signal flows for describing a method for generating bookmark information through a server according to an embodiment of the disclosure.
FIG. 10 is a flowchart for describing a method for displaying a bookmark web page list according to an embodiment of the disclosure.
FIG. 11 is a diagram for describing a method for displaying a bookmark web page list according to an embodiment of the disclosure.
FIG. 12 is a diagram for describing a method for displaying a bookmark web page list according to an embodiment of the disclosure.
FIG. 13 is a diagram for describing a method of updating bookmark information according to an embodiment of the disclosure.

### [Mode for the Invention]

Hereinafter, embodiments of the disclosure will be described in detail with reference to the accompanying drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

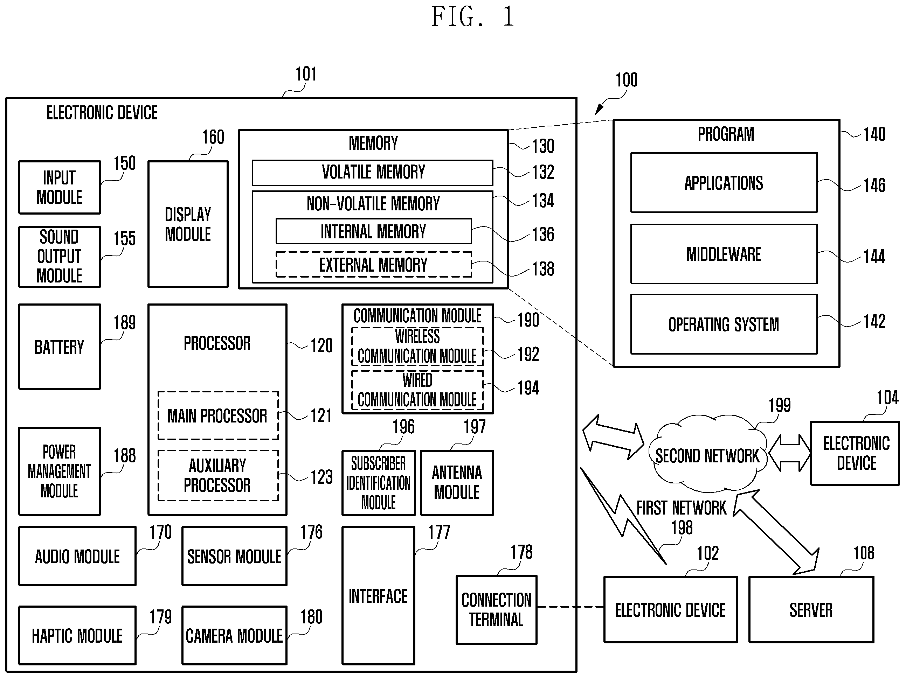

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

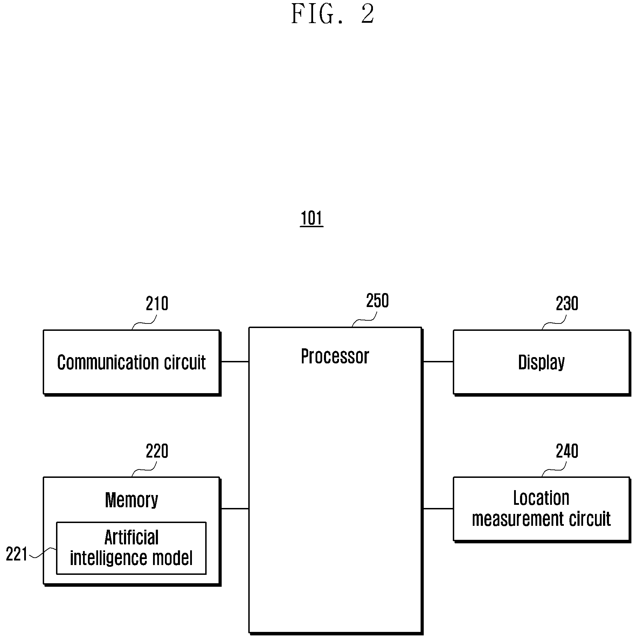

FIG. 2 is a block diagram illustrating an electronic device 101 according to an embodiment of the disclosure.

Referring to FIG. 2, the electronic device 101 (e.g., the electronic device 101 in FIG. 1) may include a communication circuit 210 (e.g., the communication module 190 in FIG. 1), a memory 220 (e.g., the memory 130 in FIG. 1), a display 230 (e.g., the display module 160 in FIG. 1), a location measurement circuit 240, and/or a processor 250 (e.g., the processor 120 in FIG. 1).

According to an embodiment of the disclosure, the communication circuit 210 (for example, the communication module 190 in FIG. 1) may control the communication connection between the electronic device 101 and at least one external electronic device (for example, the electronic device 102 and the electronic device 104 in FIG. 1) (and/or a server (for example, the server 108 in FIG. 1)) under the control of the processor 250.

In an embodiment, the communication circuit 210 may obtain first information related to at least one application used before a time point at which a user input related to a bookmark configuration is detected, under the control of the processor 250, and may transmit the same to the server 108. The communication circuit 210 may receive bookmark information related to a specific web page generated by the server 108 from the server 108 under the control of the processor 250.

According to an embodiment of the disclosure, the memory 220 (for example, the memory 130 in FIG. 1) may perform functions of storing programs for processing and control of the processor 250 (for example, the program 140 in FIG. 1) of the electronic device 101, an operating system (OS) (for example, the operating system 142 in FIG. 1), various applications, and/or programs for performing input/output data storing functions and controlling overall operations of the electronic device 101. The memory 220 may store various pieces of configuration information necessary to process functions related to various embodiments of the disclosure in the electronic device 101.

In an embodiment, the memory 220 may store instructions configured such that, upon detecting a user input related to a bookmark configuration of a specific web page, first information related to at least one application that has been used before the time point of detection of the user input is obtained. The memory 220 may store instructions for generating bookmark information related to the specific web page, based on the obtained first information.

In an embodiment, the memory 220 may include an artificial intelligence (AI) model 221. The AI model may include generative AI (GEN AI). However, this is not limitative. In an embodiment, operations based on the AI model 221 may be performed in the processor 250.

In an embodiment, the memory 220 may store bookmark information related to a specific web page mapped to identification information related to the specific web page as metadata related to the specific web page.

According to an embodiment of the disclosure, the display 230 may display images under the control of the processor 250, and may be implemented as at least one of a liquid crystal display (LCD), a light-emitting diode (LED) display, a micro LED (µLED) display, an organic light-emitting diode (OLED) display, an active matrix organic light-emitting diode (AMOLED) display, a micro electro mechanical systems (MEMS) display, an electronic paper display, a flexible display, a foldable display, or a rollable display. However, this is not limitative. However, this is not limitative.

In an embodiment, the display 230 may display a specific web page under the control of the processor 250. The display 230 may, under the control of the processor 250, display an object or a menu for configuring a bookmark together with a specific web page. The display 230 may display a list of at least one bookmark-configured web page, based on detection of a second user input for displaying a bookmark web page list, under the control of the processor 250. For example, the list of at least one bookmark-configured web page may include identification information and bookmark information related to at least one web page.

In various embodiments, the location measurement circuit 240 may measure the current location of the electronic device 101. For example, the location measurement circuit 240 may include a global positioning system (GPS) circuit and/or a global navigation satellite system (GNSS) circuit. The GPS circuit may receive signals output from at least one satellite and determine the location of the electronic device 101, based on information included in the signals (e.g., signal transmission time and satellite location information). The GNSS circuit may transfer current location information of the electronic device 101 (e.g., coordinate information including the latitude and longitude) to the processor 250.

According to an embodiment of the disclosure, the processor 250 may include, for example, a microcontroller unit (MCU), and may control multiple hardware components connected to the processor 250 by operating the operating system (OS) or embedded software programs. The processor 250 may control multiple hardware components according to instructions (for example, the program 140 in FIG. 1) stored in the memory 220.

In an embodiment, the processor 250 may display a first web page on the display 230. The processor 250 may detect a user input related to the bookmark configuration of the first web page. For example, the user input related to the bookmark configuration may include an input for selecting an object for configuring a bookmark together with the first web page or an input for selecting a menu related to the bookmark configuration. In response to a user input related to the bookmark configuration of the first web page, the processor 250 may obtain first information related to at least one application used before the time point of detection of the user input.

In an embodiment, the processor 250 may identify at least one application that has been used before the time point of detection of the user input. For example, in case that an SNS application has been used before the time point of detection of the user input, and link information related to the first web page has been received from a specific interlocutor through the SNS application, the processor 250 may obtain the specific interlocutor's identification information and/or conversation information with the specific interlocutor as the first information. As another example, upon identifying that a web browser application has been used before the time point of detection of the user input, the processor 250 may obtain keyword information input as a search word and/or search path information until the first web page is displayed, as the first information, before the first web page is displayed through the web browser application. As another example, upon identifying that an interactive search application has been used before the time point of detection of the user input, the processor 250 may obtain prompt information input by the user through the interactive search application, as the first information.

This is not limitative, and the processor 250 may further obtain current location information of the electronic device 101 through the location measurement circuit 240.

In an embodiment, the processor 250 may generate bookmark information related to the first web page, based on the obtained first information. For example, the memory 220 may include an artificial intelligence model 221. The operation of generating bookmark information related to the first web page based on the first information described above may be performed based on the artificial intelligence model 221 stored in the memory 220. This is not limitative, and the processor 250 may transmit the obtained first information to the server 108 through the communication circuit 210. The server 108 may include an artificial intelligence model. The server 108 may generate bookmark information related to the first web page, based on the first information received from the electronic device 101, by using the artificial intelligence model. The server 108 may transmit the generated bookmark information related to the first web page to the electronic device 101 through the communication circuit 210. The processor 250 may receive the bookmark information related to the first web page from the server 108.

In an embodiment, the processor 250 may map identification information related to the first web page (e.g., the first web page's domain information, uniform resource locator (URL) information, and/or the first web page's title information) and the generated bookmark information (or the bookmark information received from the server 108) and may store the same in the memory 220.

In an embodiment, the processor 250 may detect a second user input for displaying a bookmark web page list. For example, the second user input may include an input for selecting a menu (or an object) related to the display of a bookmark web page list. The processor 250 may display at least one piece of identification information and at least one piece of bookmark information related to at least one bookmarked web page on the display 230. Upon detecting a third user input for selecting the first web page from the bookmark web page list, the processor 250 may display the first web page on the display 230 in response to the third user input.

In an embodiment, after displaying the first web page selected from the bookmark web page list, the processor 250 may obtain second information related to at least one application that has been used before the time point of detection of the third user input. The processor 250 may compare the first information and the second information to identify whether different information exists. Upon identifying that different information exists, the processor 250 may update bookmark information related to the first web page.

An electronic device 101 according to an embodiment of the disclosure may include a display 230, memory 220 storing instructions, and a processor 250. Instructions according to an embodiment, when executed by the processor 250, may cause the electronic device 101 to display a first web page on the display 230. The instructions according to an embodiment, when executed by the processor 250, may cause the electronic device 101 to detect a user input related to a bookmark configuration of the first web page. The instructions according to an embodiment, when executed by the processor 250, may cause the electronic device 101 to obtain first information related to at least one application used before a time point at which the user input is detected, in response to the user input. The instructions according to an embodiment, when executed by the processor 250, may cause the electronic device 101 to generate bookmark information related to the first web page, based on the obtained first information. The instructions according to an embodiment, when executed by the processor 250, may cause the electronic device 101 to map identification information related to the first web page and the generated bookmark information and store the same in the memory 220.

In an embodiment, the at least one application may include an SNS application. In an embodiment, in case that link information related to a first web page is received from a specific interlocutor through the SNS application, first information related to at least one application used before the time point of detection of a user input may include at least one of conversation information with the specific interlocutor or identification information of the specific interlocutor.

In an embodiment, the at least one application may include an interactive search application. In an embodiment, first information related to at least one application used before the time point of detection of a user input may include at least one piece of prompt information input by the user through the interactive search application.

In an embodiment, the at least one application may include a web browser application. In an embodiment, first information related to at least one application used before the time point of detection of a user input may include at least one of path information of at least one second web page that has been displayed on the display 230 before displaying the first web page on the display 230 through the web browser application, or keyword information input on the at least one second web page.

The electronic device 101 according to an embodiment may include a location measurement circuit 240. The instructions according to an embodiment, when executed by the processor 250, may cause the electronic device 101 to obtain current location information of the electronic device 101 through the location measurement circuit 240 at a time point of detection of a user input. The instructions according to an embodiment, when executed by the processor 250, may cause the electronic device 101 to generate bookmark information related to the first web page, based on at least one of the first information or the obtained current location information.

The memory 220 according to an embodiment may include an artificial intelligence model 221. The instructions according to an embodiment, when executed by the processor 250, may cause the electronic device 101 to generate bookmark information related to the first web page, based on first information related to at least one application used before a time point of detection of a user input, through the artificial intelligence model 221.

The electronic device 101 according to an embodiment may further include a communication circuit 210. The instructions according to an embodiment, when executed by the processor 250, may cause the electronic device 101 to transmit first information related to at least one application used before a time point of detection of an obtained user input to a server 910 including an artificial intelligence model, through the communication circuit 210. The instructions according to an embodiment, when executed by the processor 250, may cause the electronic device 101 to receive bookmark information related to a first web page generated based on the first information by the artificial intelligence model included in the server 910, from the server 910.

The instructions according to an embodiment, when executed by the processor 250, may cause the electronic device 101 to display, on the display 230, a bookmarked web page list including a bookmarked first web page, based on detection of a second user input. The instructions according to an embodiment, when executed by the processor 250, may cause the electronic device 101 to detect a third user input for selecting the first web page from the bookmark web page list. The instructions according to an embodiment, when executed by the processor 250, may cause the electronic device 101 to display the first web page on the display 230 in response to the detected third user input.

The instructions according to an embodiment, when executed by the processor 250, may cause the electronic device 101 to obtain second information related to at least one application used before the time point of detection of the third user input. The instructions according to an embodiment, when executed by the processor 250, may cause the electronic device 101 to compare the first information and the second information, and in case that different pieces of information exist, update the bookmark information related to the first web page.

In an embodiment, an item representing each of at least one bookmarked web page included in the bookmark web page list may include identification information and bookmark information related to each web page.

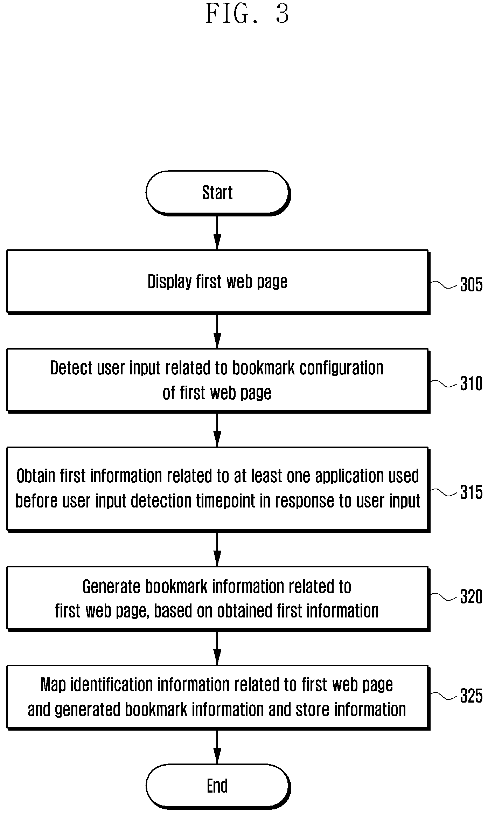

FIG. 3 is a flowchart for describing a method for generating bookmark information of a web page according to an embodiment of the disclosure.

Respective operations in FIG. 3 may be performed sequentially in the following embodiments, but are not necessarily performed sequentially. For example, the order of respective operations in FIG. 3 may be changed, and at least two operations may be performed in parallel.

According to an embodiment, operations 305 to 325 in FIG. 3 may be understood as being performed by the processor (e.g., the processor 250 in FIG. 2) of an electronic device (e.g., the electronic device 101 in FIG. 1).

Referring to FIG. 3, the processor 250 may display a first web page in operation 305.

In an embodiment, the processor 250 may detect execution of a search application or detect access to a search-related website through a web browser application. The processor 250 may display, on the display (e.g., the display 230 in FIG. 2), a first web page related to a search result corresponding to a specific search word, in response to an input of a specific search word in an executed search application or an accessed search-related web site. This is not limitative, and the processor 250 may display the first web page on the display 230, based on detecting an input for selecting the first web page from the search result including the first web page corresponding to the particular search word. Alternatively, in case of receiving link information related to the first web page from a specific interlocutor through a social network service (SNS) application, the processor 250 may display the first web page on the display 230 in response to an input for selecting the received link information. Alternatively, in case that a specific user posts link information related to the first web page on an SNS application, the processor 250 may display the first web page on the display 230 in response to an input for selecting the posted link information.

In an embodiment, the processor 250 may detect a user input related to a bookmark configuration of the first web page in operation 310. For example, the processor 250 may further display an object for a bookmark configuration together with the first web page. In this case, the user input related to the bookmark configuration may include an input for selecting an object for a bookmark configuration. This is not limitative, and the user input related to a bookmark configuration may be provided through a menu. For example, the processor 250 may provide at least one function including a bookmark configuration function which may be performed by using the first web page, as a menu. In this case, the user input related to a bookmark configuration may include an input of selecting a menu related to a bookmark configuration.

In an embodiment, in response to the user input, the processor 250 may obtain first information related to at least one application used before the time point of detection of the user input, in operation 315.

In an embodiment, the processor 250 may identify at least one application used before the time point of detection of the user input. For example, the at least one application may include an SNS application, a web browser application, and/or an interactive search application. However, this is not limitative.

In an embodiment, in case of identifying use of the SNS application before the time point of detection of the user input, the processor 250 may identify whether link information related to the first web page has been received from a specific interlocutor through the SNS application. In case of identifying that link information related to the first web page has been received from a specific interlocutor through the SNS application, the processor 250 may obtain conversation information with the specific interlocutor and/or identification information of the specific interlocutor as first information.

In an embodiment, in case of identifying use of the web browser application before the time point of detection of the user input, the processor 250 may obtain keyword information that has been input before display of the first web page through the web browser application and/or search path information until display of the first web page (e.g., path information of at least one web page displayed before display of the first web page), as first information.

In an embodiment, in case of identifying use of the interactive search application before the time point of detection of the user input, the processor 250 may obtain prompt information input by the user through the interactive search application, as first information.

In an embodiment, in operation 320, the processor 250 may generate bookmark information related to the first web page, based on the obtained first information.

In an embodiment, the processor 250 may generate bookmark information by using at least one of the pieces of first information obtained in operation 315, that is, conversation information with a specific interlocutor who has transmitted link information related to the first web page, identification information of the specific interlocutor, keyword information that has been input as a search word before display of the first web page through the web browser application, search path information until display of the first web page, and/or prompt information input through the interactive search application.

In various embodiments, although not illustrated, the processor 250 may obtain current location information of the electronic device 101 in addition to the above-described first information. For example, the processor 250 may obtain current location information of the electronic device 101 through the location measurement circuit (e.g., the location measurement circuit 240 in FIG. 2) at a time point of detection of a user input. The processor 250 may generate bookmark information related to the first web page, based on current location information obtained through the location measurement circuit 240 and/or the first information obtained in operation 315. In an embodiment, the bookmark information related to the first web page may be generated in a description format. However, this is not limitative.

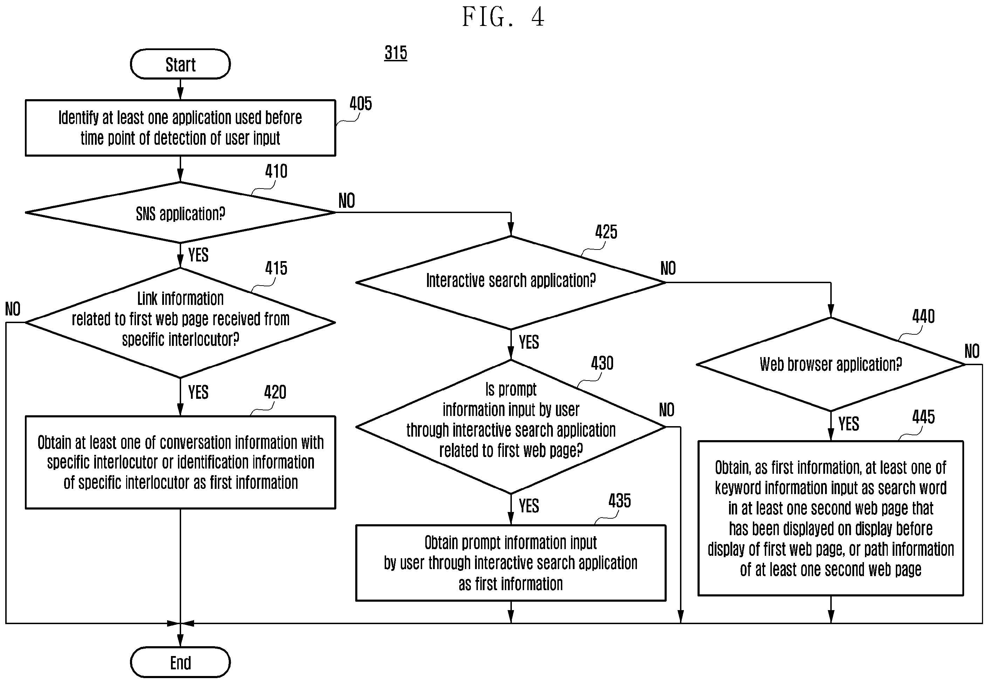

With regard to operations 315 and 320 described above, various embodiments will be described below with reference to in FIG. 4 to FIG.8B.

In an embodiment, the processor 250 may map the identification information related to the first web page and the generated bookmark information and store the same in operation 325.

In an embodiment, the identification information related to the first web page may include the first web page's domain information, uniform resource locator (URL) information, and/or the first web page's title information. However, this is not limitative.

In an embodiment, the processor 250 may configure a bookmark of the first web page, may map the identification information related to the first web page and the bookmark information, and may store the same in the memory (e.g., the memory 220 in FIG. 2).

Although it has been described with reference to FIG. 3 according to various embodiments that bookmark information related to the first web page is generated based on current location information obtained through the location measuring circuit 240 and/or the first information obtained in operation 315, this is not limitative. For example, although not illustrated, the processor 250 may further obtain biometric information of the electronic device 101 and generate bookmark information related to the first web page.

For example, the processor 250 may obtain biometric information of the user of the electronic device 101 through a sensor circuit (e.g., the sensor module 176 in FIG. 1) (e.g., a biometric sensor) at the time point of detection of a user input. For example, the biometric information may include saturation of percutaneous oxygen (SpO2), the heart rate (HR), photoplethysmography (PPG), electrocardiogram (ECG), the galvanic skin response (GSR), electroencephalogram (EEG), bioelectrical impedance analysis (BIA), the respiration time, and/or the skin temperature.

In an embodiment, the processor 250 may identify the user's emotion information (or emotional state) based on the biometric information of the user of the electronic device 101 obtained through the biometric sensor at the time point of detection of a user input. For example, the emotion information may include happiness, surprise, anger, sadness, and/or calmness. For example, in case that the heart rate obtained through the biometric sensor at the time point of detection of a user input exceeds a designated heart rate, and in case that the galvanic skin response has increased compared to the galvanic skin response before the time point of detection of a user input, the processor 250 may confirm that the user's emotional information is happiness. As another example, in case that the heart rate obtained through the biometric sensor at the time point of detection of a user input does not exceed the designated heart rate, and in case that the galvanic skin response is equal to the galvanic skin response before the time point of detection of a user input, the processor 250 may confirm that the user's emotional information is calmness. As another example, in case that the heart rate obtained through the biometric sensor at the time point of detection of a user input does not exceed the designated heart rate, and in case that the galvanic skin response has decreased compared to the galvanic skin response before the time point of detection of a user input, the processor 250 may confirm that the user's emotional information is sadness. According to various embodiments, the above-described identification of the user's emotion information based on the heart rate and the galvanic skin response is merely an embodiment for easily describing the operation of identifying the user's emotion information (or emotional state) based on the user's biometric information, and is not limitative.

In an embodiment, the processor 250 may generate bookmark information related to the first web page, based on current location information obtained through the location measurement circuit 240, the first information obtained in operation 315 above, and/or emotion information.

In an embodiment, the user may easily remember the pertinent situation in which a bookmark was configured for the first web page by identifying location information at the time point at which bookmark information related to the first web page was stored, first information (e.g., conversation information with a specific interlocutor, identification information of the specific interlocutor, keyword information input as a search word in at least one second web page, search path information, and/or prompt information), and/or emotion information, through the generated bookmark information related to the first web page.

FIG. 4 is a flowchart of detailed operations for obtaining first information in operation 315 of FIG. 3 according to an embodiment of the disclosure.

In the following embodiments, respective operations of FIG. 4 may be performed in sequence, but are not necessarily performed in sequence. For example, the order of respective operations in FIG. 4 may be changed, and at least two operations may be performed in parallel.

According to an embodiment, operations 405 to 445 in FIG. 4 may be understood as being performed by the processor (e.g., the processor 250 in FIG. 2) of an electronic device (e.g., the electronic device 101 in FIG. 1).

Referring to FIG. 4, the processor 250 may identify at least one application that has been used before the time point of detection of a user input, in operation 405. The processor 250 may identify, in operation 410, whether the at least one application that has been used before time point of detection of a user input is an SNS application. In case that the at least one application used before time point of detection of a user input is identified as an SNS application (e.g., YES in operation 410), the processor 250 may identify whether link information related to a first web page has been received from a specific interlocutor in operation 415. Upon identifying that link information related to a first web page has been received from a specific interlocutor (e.g., YES in operation 415), the processor 250 may obtain at least one of conversation information with the specific interlocutor or the specific interlocutor's identification information as first information in operation 420.

In an embodiment, upon failing to identify that link information related to a first web page has been received from a specific interlocutor (e.g., NO in operation 415), the processor 250 may terminate the operation of obtaining first information through the SNS application.

This is not limitative, and although not illustrated, the processor 250 may identify whether an input for selecting link information related to a first web page posted by a specific user in the SNS application is detected. Upon identifying detection of an input for selecting link information related to the first web page, the processor 250 may obtain, as first information, identification information of a specific user who posted the link information related to the first web page, and/or the description information composed together with the link information posted by the specific user (e.g., description information related to the link information).

In an embodiment, upon identifying that the at least one application used before the time point of detection of the user input is not an SNS application (e.g., NO in operation 410), the processor 250 may identify whether the at least one application used before the time point of detection of the user input is an interactive search application in operation 425. In case that the at least one application used before the time point of detection of the user input is identified as an interactive search application (e.g., YES in operation 425), the processor 250 may, in operation 430, identify whether prompt information input by the user through the interactive search application is related to the first web page. For example, in case that the content of the first web page includes at least one word of at least one prompt input by the user, the processor 250 may identify that at least one prompt is related to the first web page. In case that prompt information input by the user through the interactive search application is identified as being related to the first web page (e.g., YES in operation 430), the processor 250 may obtain the prompt information input by the user through the interactive search application as first information in operation 435.

In case that at least one application used before the time point of detection of a user input is not identified as an interactive search application (e.g., NO in operation 425), or in case that prompt information input by the user through the interactive search application is identified as being unrelated to the first web page (e.g., NO in operation 430), the processor 250 may terminate the operation of obtaining the first information.

In an embodiment, in case that at least one application used before the time point of detection of a user input is not identified as an interactive search application (e.g., NO in operation 425), the processor 250 may identify whether the at least one application used before the time point of detection of a user input is a web browser application in operation 440. In case that the at least one application used before the time point of detection of a user input is identified as a web browser application (e.g., YES in operation 440), the processor 250 may obtain, as first information, keyword information input as a search word in at least one second web page that has been displayed on the display 230 before display of the first web page, or path information of at least one second web page, in operation 445.

In an embodiment, upon identifying that the at least one application used before the time point of detection of a user input is not a web browser application (e.g., NO in operation 440), the processor 250 may terminate the operation of obtaining the first information.

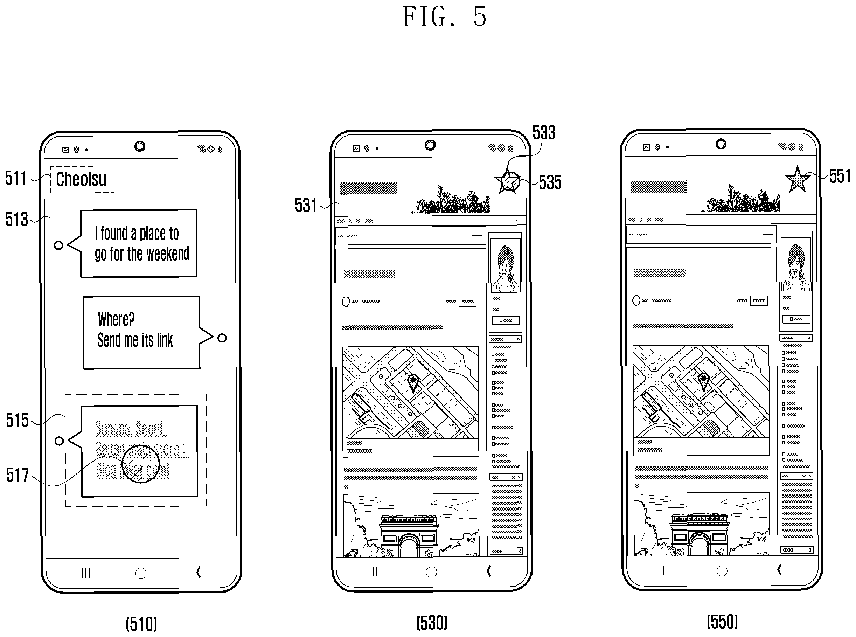

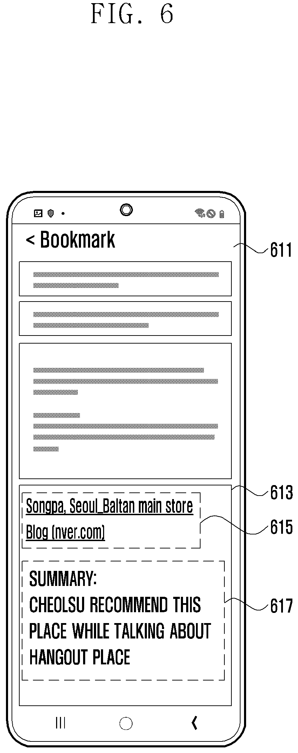

FIG. 5 and FIG. 6 are diagrams for describing operations of obtaining first information through an SNS application according to an embodiment of the disclosure.

Referring to FIG. 5 and FIG. 6, as illustrated in <510> of FIG. 5, the processor (e.g., processor 250 in FIG. 2) of the electronic device (e.g., the electronic device 101 in FIG. 1) may display a first user interface 513 including at least one message received from a specific interlocutor 511 (e.g., Cheolsu) and/or at least one message transmitted to the specific interlocutor 511 on the display (e.g., the display 230 in FIG. 2).

In an embodiment, the processor 250 may detect an input 517 of selecting a message 515 received from a specific interlocutor 511 included in a user interface 513. The message 515 received from a specific interlocutor 511 may include link information. Based on detecting an input 517 for selecting the message 515 received from the specific interlocutor 511, the processor 250 may display, on the display 230, a second user interface 531 including a specific web page corresponding to the link information, as illustrated in <530> of FIG. 5.

In an embodiment, the second user interface 531 may further display a first object 533 for configuring a bookmark of a specific web page. Upon detecting an input 535 of selecting the first object 533 for the bookmark configuration, the processor 250 may obtain first information related to at least one application that has been used before the time point of detection of the input 535 of selecting the first object 533 for the bookmark configuration.

In FIG. 5 according to various embodiments, at least one application used before the time point of detection of the input 535 for selecting the first object 533 for the bookmark configuration may include an SNS application. As described above, the second user interface 531 including the specific web page illustrated in <530> of FIG. 5 may be displayed based on detecting an input 517 of selecting a message 515 received from a specific interlocutor 511 according to <510> of FIG. 5. Based on this, the processor 250 may obtain, as the first information, at least one of conversation information with the specific interlocutor 511 or identification information of the specific interlocutor 511. The processor 250 may generate bookmark information related to a specific web page, based on at least one of the conversation information with the specific interlocutor 511 or the identification information of the specific interlocutor 511, which is obtained by the first information.

In an embodiment, upon detecting an input 535 for selecting the first object 533 for the bookmark configuration, the processor 250 may configure the bookmark of the specific web page, may map identification information related to the specific web page and generated bookmark information related to the specific web page, and may store the same in the memory (e.g., the memory 220 in FIG. 2).

In an embodiment, based on the bookmark of the specific web page being configured, the processor 250 may display an object 551 indicating the configuration of the bookmark of the specific web page, as illustrated in <550> of FIG. 5. For example, the second object 551 indicating the configuration of the bookmark of the specific web page may be an object to which a visual effect (e.g., coloring or shading) is applied to the first object 533 for the bookmark configuration. However, this is not limitative.

FIG. 6 illustrates a third user interface 611 including a list including at least one web page having a bookmark configuration according to an embodiment. The third user interface 611 may include a specific web page 613 having a bookmark configuration. The specific web page 613 having a bookmark configuration may include identification information 615 (e.g., title) related to the specific web page 613 and generated bookmark information 617 related to the specific web page 613 (e.g., a web page received from a specific interlocutor 511 through an SNS application and configured as a bookmark).

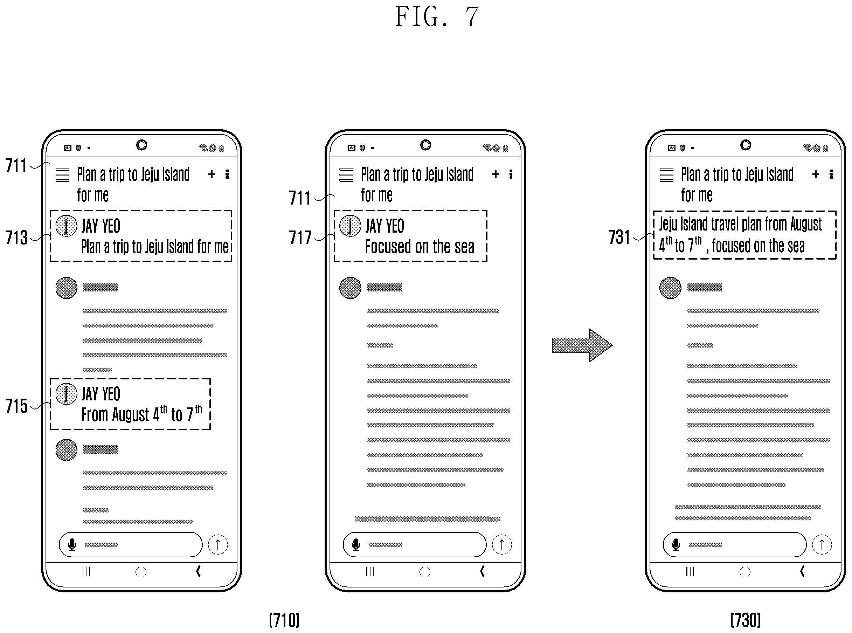

FIG. 7 is a diagram for describing operations of obtaining first information through an interactive search application according to an embodiment of the disclosure.

Referring to FIG. 7, the processor (e.g., the processor 250 in FIG. 2) of the electronic device (e.g., the electronic device 101 in FIG. 1) may detect a user input related to a bookmark configuration of a specific web page. In response to the user input related to the bookmark configuration, the processor 250 may identify at least one application that has been used before the time point of detection of the user input related to the bookmark configuration.

In FIG. 7 according to various embodiments, at least one application used before the time point of detection of a user input related to a bookmark configuration is detected may include an interactive search application. For example, as illustrated in <710> of FIG. 7, the processor 250 may display a user interface 711 related to an interactive search application on the display (e.g., the display 230 of FIG. 2). The user interface 711 related to the interactive search application may include at least one prompt 713, 715, or 717 input by the user (e.g., commands defined for the electronic device 101 to obtain specific results), and at least one result corresponding to the at least one prompt 713, 715, or 717.

In an embodiment, based on detection of a user input related to a bookmark configuration, the processor 250 may identify whether at least one prompt 713, 715, or 717 input by the user through the interactive search application is related to the first web page. For example, in case that the content of the first web page includes at least one word of at least one prompt 713, 715, or 717 input by the user, the processor 250 may identify that at least one prompt 713, 715, or 717 is related to the first web page. Upon identifying that at least one prompt 713, 715, or 717 is related to the first web page, the processor 250 may obtain at least one prompt 713, 715, or 717 as first information.

In an embodiment, as illustrated in <730> of FIG. 7, the processor 250 may generate bookmark information 731 related to a specific web page (e.g., Jeju Island travel plan from August 4^{th} to 7^{th}, focused on the sea), based on at least one prompt 713, 715, or 717 input by the user through the interactive search application obtained as first information. Based on detection of a user input related to a bookmark configuration, the processor 250 may configure the bookmark of the specific web page, may map identification information related to the specific web page and generated bookmark information 731 related to the specific web page, and may store the same in the memory (e.g., the memory 220 in FIG. 2).

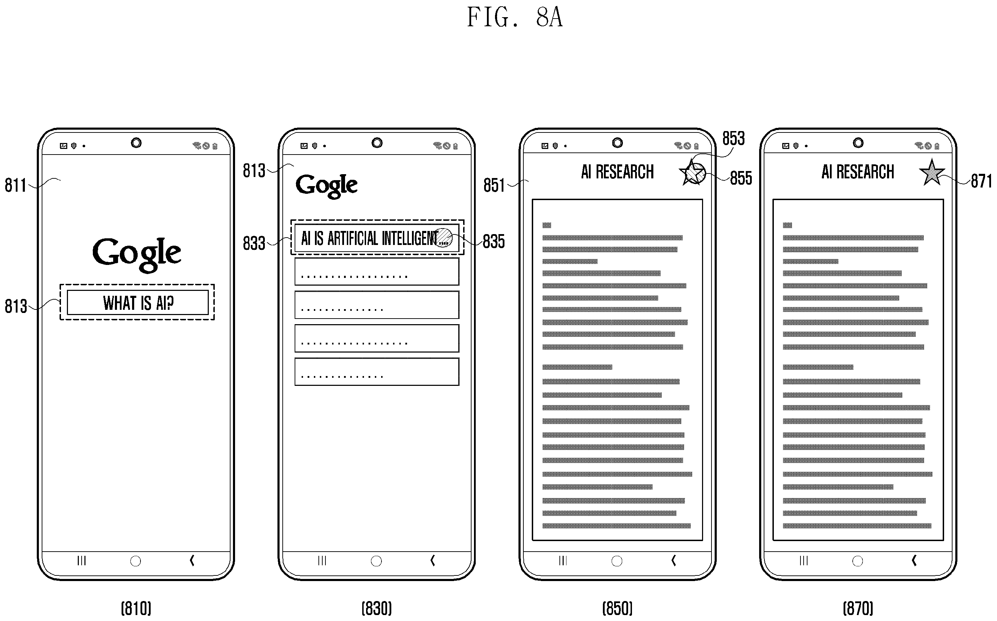

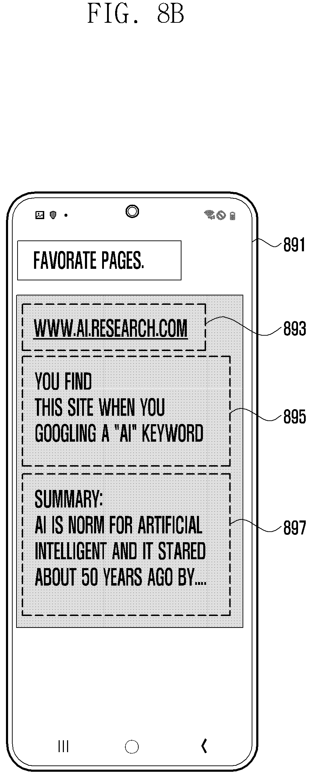

FIG. 8A and FIG. 8B are diagrams for describing operations of obtaining first information through a web browser application according to an embodiment of the disclosure.

Referring to FIGS. 8A and 8B, the processor (e.g., the processor 250 in FIG. 2) of the electronic device (e.g., the electronic device 101 in FIG. 1) may detect a user input related to a bookmark configuration of a specific web page. In response to a user input related to the bookmark configuration, the processor 250 may identify at least one application that has been used before the time point of detection of the user input related to the bookmark configuration.

In FIG. 8A according to various embodiments, the at least one application that has been used before the time point of detection of the user input related to the bookmark configuration may include a web browser application. For example, as illustrated in <810> of FIG. 8A, the processor 250 may display a first user interface 811 related to a search website on the display (e.g., the display 230 in FIG. 2) through the web browser application.

In an embodiment, the processor 250 may detect an input of a search word 813 (e.g., what is AI) and an input related to a search for the search word 813 in the first user interface 811. Based on detecting an input related to a search of the search word 813, the processor 250 may display, on the display 230, a second user interface 831 including a search result related to the search word 813, as illustrated in <830> of FIG. 8A.

In an embodiment, the processor 250 may detect an input 435 of selecting link information 833 related to a specific web page from search results included in the second user interface 831. Based on detection of an input 435 for selecting link information 833, the processor 250 may display, as illustrated in <850> of FIG. 8A, a third user interface 851 related to a specific web page corresponding to the link information 833 on the display 230. The third user interface 851 may further display a first object 853 for configuring the bookmark of a specific web page. Upon detecting an input 855 for selecting the first object 853 for configuring the bookmark, the processor 250 may obtain first information related to at least one application used before the time point of detection of an input 855 for selecting the first object 853 for configuring the bookmark.

As described above, the third user interface 831 including a specific web page illustrated in <850> of FIG. 8A may be displayed based on detecting an input of a search term 813 (e.g., what is AI) and an input related to the search for the search term 813, according to <810> of FIG. 8A. Based on this, the processor 250 may obtain path information of at least one second web page displayed through the web browser application, before the time point of detection of the input 855 of selecting the first object 835 for configuring the bookmark (e.g., path information indicating that the third user interface 815 is displayed through the first user interface 811 and the second user interface 813) and/or keyword information input in at least one second web page (e.g., a search word 813 (e.g., what is AI)), as first information. The processor 250 may generate bookmark information related to a specific web page, based on the path information of at least one second web page and/or keyword information input in the at least one second web page, obtained as the first information.

In an embodiment, upon detecting an input 855 of selecting the first object 853 for the bookmark configuration, the processor 250 may configure the bookmark of the specific web page, may map identification information related to the specific web page and generated bookmark information related to the specific web page, and may store the same in the memory (for example, the memory 220 in FIG. 2).

In an embodiment, based on the bookmark configuration for a specific web page, the processor 250 may display an object 871 indicating the bookmark configuration for the specific web, as illustrated in <870> of FIG. 8A. For example, the second object 871 indicating the bookmark configuration for a specific web page may be an object having a visual effect (e.g., coloring or shading) applied to the first object 853 for the bookmark configuration. However, this is not limitative.

FIG. 8B illustrates a fourth user interface 891 including a list including at least one web page having a bookmark configuration according to an embodiment. The fourth user interface 891 may include a specific web page having a bookmark configuration. The specific web page having a bookmark configuration may include identification information 893 (e.g., domain information) related to the specific web page, generated bookmark information 895 related to the specific web page (e.g., path information of at least one web page and/or keyword information input in the search web page), and/or summary information 897 of the specific web page.

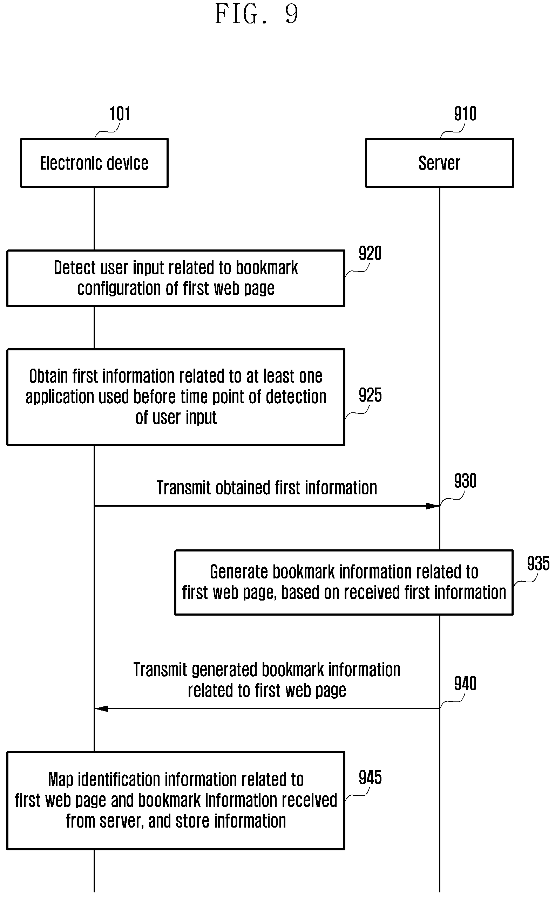

In various embodiments, the memory 220 may include an artificial intelligence model (e.g., the artificial intelligence model 221 in FIG. 2) (e.g., on-device artificial intelligence model) (e.g., Gen AI). The processor 250 may generate bookmark information related to the first web page, based on first information related to at least one application that has been used before the time point of detection of a user input obtained in response to detection of a user input related to the bookmark configuration of the first web page, by using the artificial intelligence model (Gen AI). However, this is not limitative, and for example, an operation of generating bookmark information of a web page may be performed by a server (e.g., server 108 in FIG. 1) including an AI model. In this regard, various embodiments will be described later with reference to FIG. 9.

FIG. 9 is a diagram illustrating signal flows for describing a method for generating bookmark information through a server 910 according to an embodiment of the disclosure.

Respective operations in FIG. 9 may be performed sequentially in the following embodiments, but are not necessarily performed sequentially. For example, the order of respective operations in FIG. 9 may be changed, and at least two operations may be performed in parallel.

The server 910 (e.g., the server 108 in FIG. 1) according to various embodiments may include an artificial intelligence (AI) model. The AI model may include a generative AI (GEN AI). However, this is not limitative.

Referring to FIG. 9, the electronic device (e.g., the electronic device 101 in FIG. 1) may detect a user input related to a bookmark configuration of a first web page in operation 920. In operation 925, the electronic device 101 may obtain first information related to at least one application used before the time point of detection of a user input. For example, the first information may include conversation information with a specific interlocutor who has transmitted link information related to the first web page through an SNS application and/or identification information of the specific interlocutor, keyword information that has been input as a search word in at least one second web page before display of the first web page through a web browser application and/or search path information until display of the first web page, and/or prompt information input through an interactive search application.

Operations 920 and 925 according to various embodiments are substantially the same as operations 310 and 315 in FIG. 3, and thus detailed descriptions thereof will not be repeated, and descriptions with reference to FIG. 3 may be referred to instead.

In an embodiment, the electronic device 101 may transmit the obtained first information to the server 910 through the communication circuit (for example, the communication circuit 210 in FIG. 2) in operation 930. The server 910 may generate bookmark information related to the first web page by using the AI model (e.g., Gen AI), based on the first information received from the electronic device 101, in operation 935. For example, in operation 935, the server 910 may generate bookmark information by using the AI model (e.g., Gen AI), based on at least one of the following pieces of information: conversation information with a specific interlocutor who has transmitted link information related to the first web page, identification information of the specific interlocutor, keyword information that has been input as a search word in at least one second web page before display of the first web page through a web browser application, search path information until display of the first web page, or prompt information input through an interactive search application.

In an embodiment, the server 910 may transmit bookmark information related to the first web page generated through the AI model to the electronic device 101 through the communication circuit in operation 940.

In an embodiment, the electronic device 101 may map identification information related to the first web page and bookmark information received from the server 910, and may store the same in the memory (e.g., the memory 220 in FIG. 2) in operation 945. For example, the electronic device 101 may configure the bookmark of the first web page, may map identification information (e.g., domain information, URL information, and/or title information of the first web page) related to the first web page and bookmark information received from the server 910, and may store the same in the memory 220.

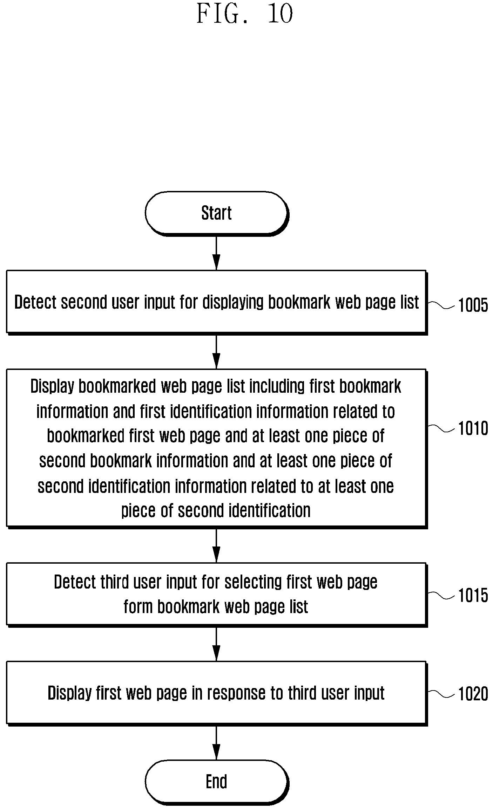

FIG. 10 is a flowchart for describing a method for displaying a bookmark web page list according to an embodiment of the disclosure.

Respective operations in FIG. 10 may be performed sequentially in the following embodiments, but are not necessarily performed sequentially. For example, the order of respective operations in FIG. 10 may be changed, and at least two operations may be performed in parallel.

According to an embodiment, operations 1005 to 1020 of FIG. 10 may be understood as being performed by the processor (e.g., the processor 250 in FIG. 2) of an electronic device (e.g., the electronic device 101 in FIG. 1).

Referring to FIG. 10, the processor 250 may detect a second user input for displaying a bookmark web page list in operation 1005. For example, the processor 250 may detect a second user input for selecting a menu (or an object) related to displaying a bookmark web page list.

In an embodiment, the processor 250 may display, in operation 1010, a bookmarked web page list including first bookmark information and first identification information related to a bookmarked first web page, at least one piece of second bookmark information and at least one piece of second identification information related to at least one bookmarked second web page. For example, the first bookmark information may be information generated based on first information regarding at least one application used before the time point of detection of a user input, obtained in response to a user input related to the bookmark configuration of the first web page.

In an embodiment, the processor 250 may detect a third user input for selecting the first web page from the bookmark web page list in operation 1015. In operation 1020, the processor 250 may display the first web page in response to the third user input.

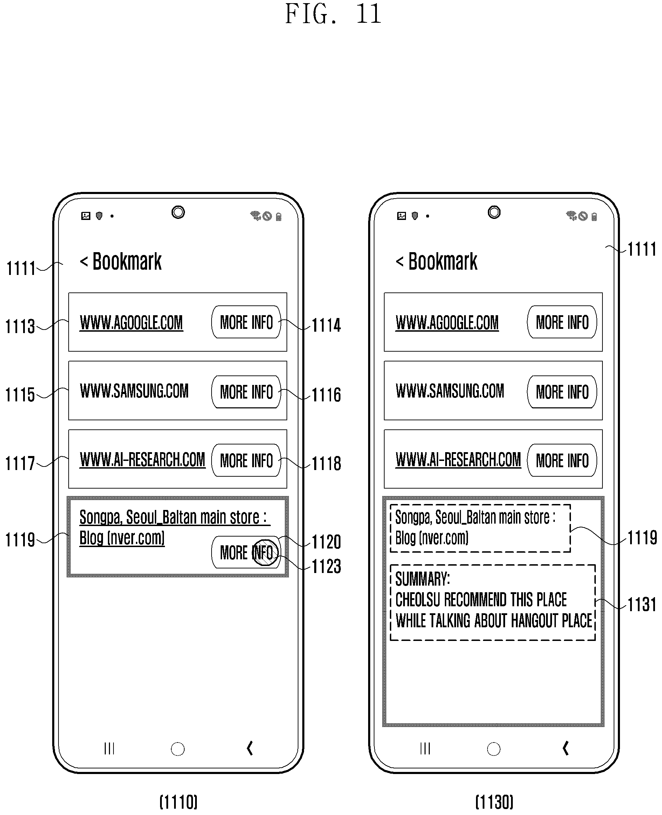

FIG. 11 is a diagram for describing a method for displaying a bookmark web page list according to an embodiment of the disclosure.

Referring to FIG. 11, the processor (e.g., the processor 250 in FIG. 2) of the electronic device (e.g., the electronic device 101 in FIG. 1) may display, on the display (e.g., the display 230 in FIG. 2), a user interface 1111 including a list including at least one bookmark-configured web page, as illustrated in <1110> of FIG. 11.

In an embodiment, the user interface 1111 may include an object 1114 for displaying identification information (e.g., domain information, URL information, and/or title information) of the bookmarked first web page 1113 and bookmark information related to the first web page 1113, an object 1116 for displaying identification information (e.g., domain information, URL information, and/or title information) of the second web page 1115 and bookmark information related to the second web page 1115, an object 1118 for displaying identification information (e.g., domain information, URL information, and/or title information) of the third web page 1117 and bookmark information related to the third web page 1117, and/or an object 1120 for displaying identification information (e.g., domain information, URL information, and/or title information) of the fourth web page 1119 and bookmark information related to the fourth web page 1119.

In an embodiment, the processor 250 may detect an input for selecting an object 1120 for displaying bookmark information related to the fourth web page 1119. Upon detecting an input for selecting the object 1120 for displaying bookmark information related to the fourth web page 1119, the processor 250 may further display bookmark information 1131 related to the fourth web page 1119 (e.g., a web page received from a specific interlocutor 511 through an SNS application and then bookmark-configured) on the display 230, as illustrated in <1130> of FIG. 11.

Although it has been described in FIG. 11 according to various embodiments that bookmark information is displayed based on detection of an input for selecting an object 1120 for displaying bookmark information, this is not limitative. For example, the processor 250 may display identification information (e.g., domain information, URL information, and/or title information) of bookmarked web pages 1113, 1115, 1117, and 1119 together with bookmark information 1131 of each web page.

In various embodiments, although not illustrated, the processor 250 may classify (or group) multiple bookmarked web sites, based on bookmark information. For example, the processor 250 may classify (or group) multiple bookmarked web sites having the same bookmark information. In this case, the processor 250 may display the bookmarked multiple websites classified (or grouped) based on bookmark information as a bookmark web page list.

In various embodiments, although not illustrated, the processor 250 may transmit (or share) the bookmarked web page to an external electronic device. In case of transmitting (or sharing) the bookmarked web page to the external electronic device, the processor 250 may also transmit bookmark information of the bookmarked web page. Accordingly, the user of the external electronic device that has received the bookmarked web page may intuitively identify the reason the web page has been bookmark-configured by the user of the electronic device 101 through the bookmark information, and then use the web page.

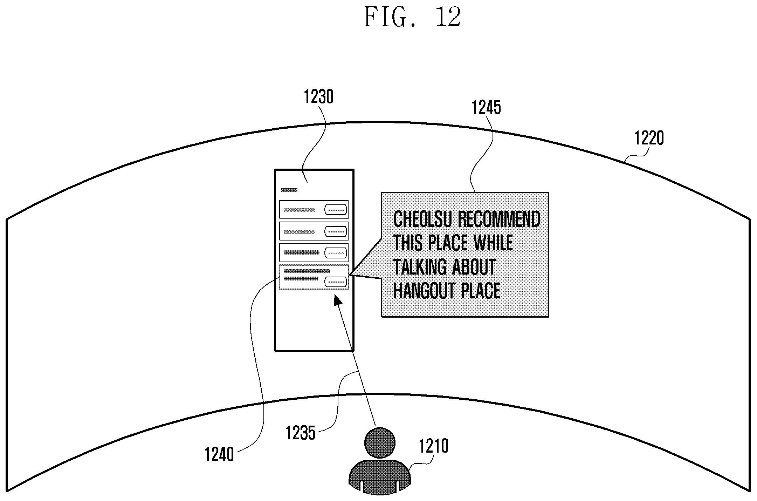

FIG. 12 is a diagram for describing a method for displaying a bookmark web page list according to an embodiment of the disclosure.

FIG. 12 is a diagram for describing a method for displaying a bookmarked web page list in an extended reality (XR) environment according to various embodiments. For example, the electronic device (e.g., the electronic device 101 in FIG. 1) may include a wearable electronic device. The wearable electronic device may include eyeglass-type augmented reality (AR) glasses, smart glasses, or a head-mounted display (HMD).

In an embodiment according to FIG. 12, the user 1210 of the electronic device 101 may be wearing a wearable electronic device.

Referring to FIG. 12, the processor (e.g., the processor 250 in FIG. 2) of the electronic device 101 may display a user interface 1230 including a list including at least one bookmark-configured web page on the display 1220 (e.g., the display 230 in FIG. 2). The user interface 1230 may include an object 1114 for displaying identification information (e.g., domain information, URL information, and/or title information) of the bookmarked first web page 1113 and bookmark information related to the first web page 1113, an object 1116 for displaying identification information (e.g., domain information, URL information, and/or title information) of the second web page 1115 and bookmark information related to the second web page 1115, an object 1118 for displaying identification information (e.g., domain information, URL information, and/or title information) of the third web page 1117 and bookmark information related to the third web page 1117, and/or an object 1120 for displaying identification information (e.g., domain information, URL information, and/or title information) of the fourth web page 1119 or 1240 and bookmark information related to the fourth web page 1119 or 1240, as in the user interface 1111 described above with reference to FIG. 11.

In an embodiment, the electronic device 101 may include multiple gaze-tracking cameras (not illustrated) for tracking movements of the pupils of the user 1210. The multiple gaze-tracking cameras may include a first gaze-tracking camera and a second gaze-tracking camera. The first gaze-tracking camera may track the movement of the left eye of the user 1210, and the second gaze-tracking camera may track the movement of the right eye of the user 1210.

In an embodiment, the processor 250 may detect the user's pupils (e.g., left and right eyes) through the multiple eye-tracking cameras and track the gaze direction of the user 1210. In case that the tracked gaze direction of the user 1210 is identified as being directed (1235) toward an object 1120 for displaying identification information (e.g., domain information, URL information, and/or title information) of the fourth web page 1119 or 1240 or bookmark information related to the fourth web page 1119 or 1240, the processor 250 may display bookmark information 1245 related to the fourth web page 1119, 1240 on the display 1220.

In an embodiment, the bookmark information 1245 may be provided in a text-based and/or 3D format. Alternatively, in case that location information is included in bookmark information 1245, the bookmark information 1245 may provide location information through a map.

Although the bookmark information 1245 according to an embodiment has been described as being provided through the display 1220, this is not limitative. For example, in case that an artificial intelligence assistant function (e.g., AI assistant) is activated, the processor 250 may provide the bookmark information 1245 in an audio format.

According to various embodiments, in case that a user input related to a bookmark configuration of a specific web page is detected in FIG. 3 to FIG. 12, the processor 250 may obtain first information related to at least one application used before the time point of detection of a user input and may provide the user with bookmark information related to the specific web page generated based on the obtained first information, together with identification information related to the bookmarked specific web page. Accordingly, the user may remember the reason for the specific web page bookmark configuration through bookmark information related to the specific web page, thereby improving the usability of the bookmarked specific web page.

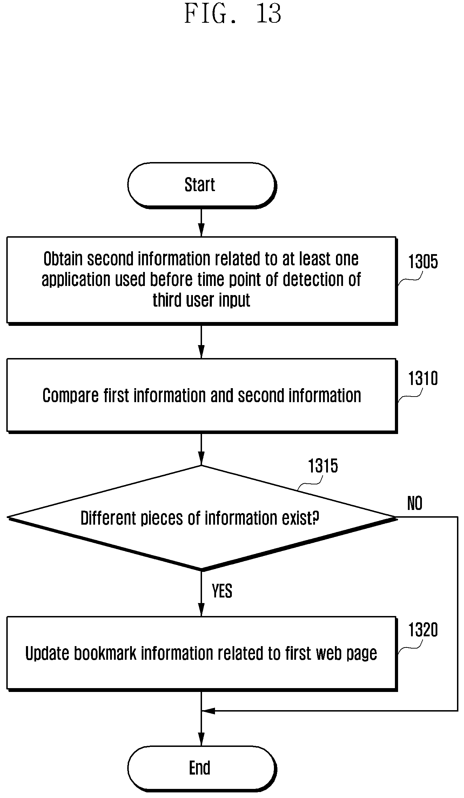

FIG. 13 is a diagram for describing a method for updating bookmark information according to an embodiment of the disclosure.

Respective operations in FIG. 13 may be performed sequentially in the following embodiments, but are not necessarily performed sequentially. For example, the order of respective operations in FIG. 13 may be changed, and at least two operations may be performed in parallel.

According to an embodiment, operations 1305 to 1320 in FIG. 13 may be understood as being performed by the processor (e.g., the processor 250 in FIG. 2) of an electronic device (e.g., the electronic device 101 in FIG. 1).

According to various embodiments, FIG. 13 may illustrate additional operations of FIG. 10 described above.

Referring to FIG. 13, the processor 250 may obtain second information related to at least one application used before the time point of detection of a third user input in operation 1305.

The second information according to an embodiment may be substantially identically obtained as the above-described first information obtained in operation 315 of FIG. 3.

In an embodiment, in operation 1310, the processor 250 may compare the first information and the second information. In operation 1315, the processor 250 may identify whether different pieces of information exist. In case that different pieces of information exist (e.g., YES in operation 1315), the processor 250 may update bookmark information related to the first web page in operation 1320. For example, bookmark information related to the first web page, which is based on the first information, may be replaced with bookmark information based on the second information, and thus the first web site may be updated. This is not limitative, and the processor 250 may add the bookmark information based on the second information to the bookmark information based on the first information to update the bookmark information related to the first website. In case that different pieces of information do not exist (e.g., NO in operation 1315), the processor 250 may terminate the operation of identifying whether to update the bookmark information.

This is not limitative, and the processor 250 may obtain current location information of the electronic device 101 in addition to the second information described above. For example, the processor 250 may obtain current location information of the electronic device 101 through the location measurement circuit (for example, the location measurement circuit 240 in FIG. 2). In case that the current location information obtained through the location measurement circuit 240 is different from the previously obtained location information, the processor 250 may replace the previously obtained location information with the current location information or add the current location information thereto, thereby updating the bookmark information related to the first web site.

A method for storing a web page by an electronic device 101 according to an embodiment of the disclosure may include an operation of displaying a first web page on a display 230. The method for storing a web page by an electronic device 101 according to an embodiment of the disclosure may include an operation of detecting a user input related to a bookmark configuration of the first web page. The method for storing a web page by an electronic device 101 according to an embodiment of the disclosure may include an operation of, in response to the user input, obtaining first information related to at least one application used before a time point when the user input is detected. The method for storing a web page by an electronic device 101 according to an embodiment of the disclosure may include an operation of generating bookmark information related to the first web page, based on the obtained first information. The method for storing a web page by an electronic device 101 according to an embodiment of the disclosure may include an operation of mapping identification information related to the first web page and the generated bookmark information, and storing the mapped information in the memory 220.

In an embodiment, the at least one application may include an SNS application. In an embodiment, in case that link information related to a first web page is received from a specific interlocutor through the SNS application, first information related to at least one application used before the time point of detection of a user input may include at least one of conversation information with the specific interlocutor or identification information of the specific interlocutor.

In an embodiment, the at least one application may include an interactive search application. In an embodiment, first information related to at least one application used before the time point of detection of a user input may include at least one piece of prompt information input by the user through the interactive search application.

In an embodiment, the at least one application may include a web browser application. In an embodiment, first information related to at least one application used before the time point of detection of a user input may include at least one of path information of at least one second web page that has been displayed on the display 230 before displaying the first web page on the display 230 through the web browser application, or keyword information input on the at least one second web page.

The method for storing a web page by an electronic device 101 according to an embodiment may include an operation of obtaining current location information of the electronic device 101 through a location measurement circuit 240 at the time point when the user input is detected. The method for storing a web page by an electronic device 101 according to an embodiment may include an operation of generating the bookmark information related to the first web page, based on at least one of the obtained current location information or the first information.

In an embodiment, the operation of generating bookmark information related to the first web page may include an operation of generating bookmark information related to the first web page, based on first information related to at least one application used before the timepoint of detection of a user input, through an artificial intelligence model 221 stored in the memory 220.

The method for storing a web page by an electronic device 101 according to an embodiment may include an operation of transmitting first information related to at least one application used before the timepoint of detection of a user input obtained, through a communication circuit 210, to a server 910 including an artificial intelligence model. The method for storing a web page by an electronic device 101 according to an embodiment may include an operation of receiving, from the server 910, bookmark information related to the first web page generated by the artificial intelligence model included in the server 910, based on the first information.

The method for storing a web page by an electronic device 101 according to an embodiment may include an operation of, based on detecting a second user input, displaying a bookmark web page list including the bookmarked first web page on the display 230. The method for storing a web page by an electronic device 101 according to an embodiment may include an operation of detecting a third user input for selecting the first web page from the bookmark web page list. The method for storing a web page by an electronic device 101 according to an embodiment may include an operation of, in response to the detected third user input, displaying the first web page on the display 230.

The method for storing a web page by an electronic device 101 according to an embodiment may include an operation of obtaining second information related to at least one application used before a time point of detection of the third user input. The method for storing a web page by an electronic device 101 according to an embodiment may include an operation of comparing the first information and the second information, and in case that different pieces of information exist, updating the bookmark information related to the first web page.

In an embodiment, an item representing each of at least one bookmarked web page included in the bookmark web page list may include identification information and bookmark information related to each web page.

According to an embodiment of the disclosure, a non-transitory computer-readable medium storing instructions that, when executed by a processor 250 of an electronic device 101, cause the processor 250 to perform operations may perform an operation of displaying a first web page on a display 230. The non-transitory computer-readable medium storing instructions that, when executed by a processor 250 of an electronic device 101, cause the processor 250 to perform operations according to an embodiment may perform an operation of detecting a user input related to a bookmark configuration of the first web page. The non-transitory computer-readable medium storing instructions that, when executed by a processor 250 of an electronic device 101, cause the processor 250 to perform operations according to an embodiment may perform an operation of, in response to the user input, obtaining first information related to at least one application used before a time point when the user input is detected. The non-transitory computer-readable medium storing instructions that, when executed by a processor 250 of an electronic device 101, cause the processor 250 to perform operations according to an embodiment may perform an operation of generating bookmark information related to the first web page, based on the obtained first information. The non-transitory computer-readable medium storing instructions that, when executed by a processor 250 of an electronic device 101, cause the processor 250 to perform operations according to an embodiment may perform an operation of mapping identification information related to the first web page and the generated bookmark information, and store the mapped information in the memory 220.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added

## Claims

1. An electronic device (101) comprising:
a display (230);
memory (220) storing instructions; and
a processor (250),
wherein the instructions, when executed by the processor (250), cause the electronic device (101) to:
display a first web page on the display (230);
detect a user input related to a bookmark configuration of the first web page;
in response to the user input, obtain first information related to at least one application used before a time point when the user input is detected;
generate bookmark information related to the first web page, based on the obtained first information; and
map identification information related to the first web page and the generated bookmark information, and store the mapped information in the memory (220).

2. The electronic device (101) of claim 1, wherein the at least one application comprises an SNS application, and
wherein in case that link information related to the first web page is received from a specific interlocutor through the SNS application, the first information comprises at least one of conversation information with the specific interlocutor or identification information of the specific interlocutor.

3. The electronic device (101) of claim 1 or 2, wherein the at least one application comprises an interactive search application, and
wherein the first information comprises at least one prompt information input by a user through the interactive search application.

4. The electronic device (101) of any of claims 1 to 3, wherein the at least one application comprises a web-browser application, and
wherein the first information comprises at least one of path information of the at least one second web page having been displayed on the display (230) before displaying the first web page on the display (230) through the web-browser application, and keyword information input in the at least one second web page.

5. The electronic device (101) of any of claims 1 to 4, further comprising a location measurement circuit (240),
wherein the instructions, when executed by the processor (250), cause the electronic device (101) to:
obtain current location information of the electronic device (101) through the location measurement circuit (240) at the time point when the user input is detected; and
generate the bookmark information related to the first web page, based on at least one of the obtained current location information or the first information.

6. The electronic device (101) of any of claims 1 to 5, further comprising an artificial intelligence model (221) stored in the memory (220),
wherein the instructions, when executed by the processor (250), cause the electronic device (101) to generate the bookmark information related to the first web page, based on the obtained first information, through the artificial intelligence model (221).

7. The electronic device (101) of any of claims 1 to 5, further comprising a communication circuit (210),
wherein the instructions, when executed by the processor (250), cause the electronic device (101) to:
transmit the obtained first information to a server (910) comprising an artificial intelligence model, through the communication circuit (210); and
receive, from the server (910), the bookmark information related to the first web page, the bookmark information being generated by the artificial intelligence model included in the server (910), based on the first information.

8. The electronic device (101) of any of claims 1 to 7, wherein the instructions, when executed by the processor (250), cause the electronic device (101) to:
based on detecting a second user input, display a bookmark web page list comprising the bookmarked first web page on the display (230);
detect a third user input for selecting the first web page from the bookmark web page list;
in response to the detected third user input, display the first web page on the display (230);
obtain second information related to at least one application used before a time point when the third user input is detected; and
compare the first information and the second information, and in case that different pieces of information exist, update the bookmark information related to the first web page,
wherein an item representing each of at least one bookmarked web page included in the bookmark web page list comprises identification information and bookmark information related to each web page.

9. A method for storing a web page by an electronic device (101), the method comprising:
displaying a first web page on a display (230);
detecting a user input related to a bookmark configuration of the first web page;
in response to the user input, obtaining first information related to at least one application used before a time point when the user input is detected;
generating bookmark information related to the first web page, based on the obtained first information; and
mapping identification information related to the first web page and the generated bookmark information, and storing the mapped information in a memory (220).

10. The method of claim 9, wherein, in case that the at least one application is an SNS application, and link information related to the first web page is received from a specific interlocutor through the SNS application, the first information comprises at least one of conversation information with the specific interlocutor or identification information of the specific interlocutor,
wherein, in case that the at least one application is an interactive search application, the first information comprises at least one prompt information input by a user through the interactive search application, and
wherein, in case that the at least one application is a web-browser application, the first information comprises at least one of path information of the at least one second web page having been displayed on the display (230) before displaying the first web page on the display (230) through the web-browser application, or keyword information input in the at least one second web page.

11. The method of claim 9 or 10, further comprising:
obtaining current location information of the electronic device (101) through a location measurement circuit (240) at the time point when the user input is detected; and
generating the bookmark information related to the first web page, based on at least one of the obtained current location information or the first information.

12. The method of any of claims 9 to 11, wherein the generating of bookmark information related to the first web page comprises generating the bookmark information related to the first web page, based on the obtained first information, through an artificial intelligence model (221) stored in the memory (220).

13. The method of any of claims 9 to 11, further comprising:
transmitting the obtained first information to a server (910) comprising an artificial intelligence model, through a communication circuit (210); and
receiving, from the server (910), the bookmark information related to the first web page, the bookmark information being generated by the artificial intelligence model included in the server (910), based on the first information.

14. The method of any of claims 9 to 13, further comprising:
based on detecting a second user input, displaying a bookmark web page list comprising the bookmarked first web page on the display (230);
detecting a third user input for selecting the first web page from the bookmark web page list;
in response to the detected third user input, displaying the first web page on the display (230);
obtaining second information related to at least one application used before a time point when the third user input is detected; and
comparing the first information and the second information, and in case that different pieces of information exist, updating the bookmark information related to the first web page,
wherein an item representing each of at least one bookmarked web page included in the bookmark web page list comprises identification information and bookmark information related to each web page.

15. A non-transitory computer-readable medium storing instructions that, when executed by a processor (250) of an electronic device (101), cause the processor (250) to perform:
displaying a first web page on a display (230);
detecting a user input related to a bookmark configuration of the first web page;
in response to the user input, obtaining first information related to at least one application used before a time point when the user input is detected;
generating bookmark information related to the first web page, based on the obtained first information; and
mapping identification information related to the first web page and the generated bookmark information, and store the mapped information in a memory (220).
